# EUROPÄISCHE PATENTANMELDUNG

(11) **EP 3 657 100 A1**
(43) Veröffentlichungstag der Anmeldung: **27.05.2020**
(21) Anmeldenummer: 19210809.0
(22) Anmeldetag: 22.11.2019
(51) Int. Cl.: F25B 31/02, F04B 39/12, F16K 27/02, F16K 31/06, F25B 41/06, B29C 64/00

(54) **SYSTEM MIT HERMETISCH DICHTEM GEHÄUSE UND AUSSENANREGUNG**

(30) Priorität: 23.11.2018 DE 102018129571
(71) Anmelder: Viessmann Werke GmbH & Co KG, 35108 Allendorf (DE)
(72) Erfinder: Gebelein, Bernd, 95179 Geroldsgrün (DE)
(74) Vertreter: Sperschneider, Alexandra

(57) **Zusammenfassung**

Die Erfindung betrifft ein System mit hermetisch dichtem Gehäuse und Außenanregung einer Verdichtereinheit oder eines Drosselorgans.

## Beschreibung

Die vorliegende Erfindung betrifft ein System mit wenigstens einer Verdichtereinheit, wenigstens einem Drosselorgan sowie wenigstens einen Wärmetauscher, wobei diese von einem hermetisch dichten Gehäuse umschlossen sind.

### Stand der Technik

Aus dem Stand der Technik sind Verdichtereinheiten bekannt, welche hermetisch abgekapselt sind. Dies wird beispielsweise in der DE 2451524B1 beschrieben. Diese Druckschrift betrifft eine Kältemaschine mit einem hermetisch verschlossenen Kältemittelkreislauf, dessen Kältemittelverdichter in einer Kapsel angeordnet ist. Innerhalb dieser Kapsel ist die Antriebseinheit in Form eines Motors, welcher aus einem Stator und einem Rotor besteht, angeordnet. Die gemeinsame Anordnung von Motor und Kompressor innerhalb des gekapselten Gehäuses erweist sich dahingehend als nachteilig, da im Falle eines Motordefekts stets die vollständige Kapseleinheit ersetzt und getauscht werden muss. Dies bedingt zusätzliche Kosten für Material und Arbeitszeit. Auch können in diesem Fall keine Wartungsarbeiten durchgeführt werden, sondern es muss in regelmäßigen Abständen ein Vollaustausch der Kapsel erfolgen.

### Aufgabe

Daher liegt der vorliegenden Erfindung die Aufgabe zugrunde, ein System bereitzustellen, dessen Antriebseinheit besonders kostengünstig und einfach repariert bzw. gewartet werden kann, unter Beibehaltung der hermetischen Abdichtung der einzelnen Bauteile bzw. des Gesamtsystems.

### Lösung

Der Kerngedanke der vorliegenden Erfindung besteht darin, ein System mit wenigstens einer Verdichtereinheit, beispielsweise einem Kompressor, zum Verdichten wenigstens eines gasförmigen und/oder flüssigen Fluidmittels bereitzustellen, wobei die Verdichtereinheit wenigstens ein Verdichterelement zur Ausbildung eines Vortriebs des wenigstens einen gasförmigen und/oder flüssigen Fluidmittels aufweist, und das System weiterhin wenigstens ein Drosselorgan und wenigstens einen Wärmetauscher aufweist, wobei wenigstens Verdichtereinheit und/oder Drosselorgan und/oder Wärmetauscher von einem hermetisch dichten Gehäuse umschlossen sind und das wenigstens eine Verdichterelement und/oder das wenigstens eine Drosselorgan in einer aktiven Betriebsfunktion von außerhalb des Gehäuses her angeregt sind.

Es hat sich erstmals überraschenderweise gezeigt, dass es möglich ist, eine Verdichtereinheit und/oder ein Drosselorgan, beispielsweise in einem Kältesystem und/oder in einem Kühlsystem und/oder in einem Heizsystem, in einem hermetisch dichten Gehäuse anzuordnen. Hierdurch kann eine besonders kompakte Bauweise sichergestellt werden.

Durch die hermetisch dichte Ausbildung des Gehäuses kann ein unerwünschter und gesundheitsschädlicher Fluidmittelaustritt, beispielsweise bei einem Leitungsleck, verhindert werden. Das aus einem möglichen Leck austretende gasförmige und/oder flüssige Fluidmittel wird dann innerhalb des hermetisch dichten Gehäuses sicher gehalten. Vorteilhaft wird unter hermetisch dicht gasdicht und/oder flüssigkeitsdicht verstanden.

Als Ergänzung zu dem hermetisch dichten Gehäuse ist das wenigstens eine Verdichterelement und/oder das wenigstens eine Drosselorgan derart ausgebildet, dass diese innerhalb des hermetisch dichten Gehäuses angeordnet sind. Zugleich ist wenigstens das Verdichterelement und/oder das Drosselorgan responsiv ausgebildet. Verdichterelement und/oder Drosselorgan werden von außerhalb des Gehäuses her angeregt. Wird beispielsweise eine äußere Reizquelle geschalten, so kann über diese äußere Reizquelle das wenigstens eine Verdichterelement und/oder das wenigstens eine Drosselorgan innerhalb des hermetisch dichten Gehäuses angeregt werden, sodass Verdichterelement und/oder Drosselorgan von einer inaktiven Betriebsfunktion eine aktive Betriebsfunktion wechseln können. Selbstverständlich ist dies auch umgekehrt möglich.

Die äußere Reizquelle, welche auch als Aktor bezeichnet werden kann, steuert und/oder kontrolliert die Betriebsfunktion von Verdichterelement und/oder Drosselorgan.

Unter Betriebsfunktion ist vorteilhaft der funktionsgemäße Gebrauch zu verstehen, sodass das Verdichterelement und/oder das Drosselorgan von einem inaktiven in einen aktiven oder von einem aktiven in einen inaktiven Betriebszustand geschalten werden können.

Erfindungsgemäß ist es erstmals möglich, die wenigstens eine Verdichtereinheit und/oder das wenigstens eine Drosselorgan und/oder den Wärmetauscher jeweils oder in ihrer Gesamtheit von einem hermetisch dichten Gehäuse zu umgeben und von außen anzuregen.

Weitere vorteilhafte Ausführungsformen ergeben sich aus den Unteransprüchen.

In einer weiteren vorteilhaften Ausführungsform ist das wenigstens eine Verdichterelement und/oder das wenigstens eine Drosselorgan in der aktiven Betriebsfunktion direkt und/oder indirekt von außen über den wenigstens einen Aktor angeregt. Vorteilhaft ist unter direkter Außenanregung zu verstehen, dass Verdichterelement und/oder Drosselorgan direkt mit dem wenigstens einen Aktor in Wechselwirkung stehen. Dies kann beispielsweise dadurch erfolgen, dass eine direkte Signalübertragung zwischen den wenigstens einen Aktor und dem Verdichterelement und/oder dem Drosselorgan erfolgt.

Unter indirekter Außenanregung über wenigstens einen Aktor ist vorteilhaft zu verstehen, dass zwischen dem wenigstens einen Aktor und dem Verdichterelement und/oder dem Drosselorgan wenigstens eine weitere Einheit zwischengeschaltet ist, welche beispielsweise das Signal des Aktors verstärkt und dieses dann an das Verdichterelement und/oder das Drosselorgan weiterleitet.

In einer weiteren vorteilhaften Ausführungsform ist das wenigstens eine Verdichterelement magnetisch ausgebildet und/oder dass mindestens eine Drosselorgan magnetisch betätigbar ausgebildet. In diesem Ausführungsbeispiel ist der wenigstens eine Aktor entsprechend ebenfalls magnetisch steuerbar. Es versteht sich, dass es möglich ist, dass jeweils einen Aktor pro Verdichterelement und pro Drosselorgan vorgesehen ist. Selbstverständlich ist es aber auch möglich, den Aktor derart auszubilden, beispielsweise über dessen Geometrie, dass lediglich ein einziger Aktor das wenigstens eine Verdichterelement und/oder das wenigstens eine Drosselorgan zugleich anregen kann. Dies kann beispielsweise über eine besondere geometrische Form des Aktors und durch eine entsprechende Ausbildung seiner Materialbeschaffenheit, vorteilhaft in Abhängigkeit des gewünschten Magnetismus, vorgesehen sein.

Bei einer weiteren vorteilhaften Ausführungsform weist die wenigstens eine Verdichtereinheit und/oder das wenigstens eine Drosselorgan jeweils wenigstens eine Schnittstelle auf, welche zur Steuerung der aktiven Betriebsfunktion vorgesehen ist. Der außerhalb des hermetisch dichten Gehäuses angeordnete Aktor ist vorteilhaft mit der wenigstens einen Schnittstelle zur Steuerung der Betriebsfunktion von Verdichterelement und/oder Drosselorgan gekoppelt. Dies ist von Vorteil, wenn insbesondere spezielle Signalübertragungen zwischen Aktor und Verdichtereinheit und/oder zwischen Aktor und Drosselorgan vorgesehen sind. Über diese Schnittstellen und deren Kopplung kann im einfachsten Fall die Verdichtereinheit und/oder das Drosselorgan von einer aktiven Betriebsfunktion in eine inaktive Betriebsfunktion oder umgekehrt geschalten werden.

Bei einer weiteren vorteilhaften Ausführungsform ist der wenigstens eine Aktor als eine außerhalb des Gehäuses angeordnete Antriebseinheit des wenigstens einen Verdichterelements ausgebildet und/oder ist ein weiterer Aktor als eine außerhalb des Gehäuses angeordnete Betätigungseinheit des wenigstens einen Drosselorgans ausgebildet.

Besonders vorteilhaft weist der Aktor wenigstens ein Spulensystem auf. Dieses Spulensystem erzeugt wenigstens ein Drehfeld. Verdichterelement und/oder Betätigungseinheit des wenigstens einen Drosselorgans weisen jeweils für sich wenigstens ein auf das Drehfeld responsives Element auf. Dieses Element, beispielsweise ein Stator, ist innerhalb des Gehäuses angeordnet, und wird durch das Drehfeld zur Bewegung angeregt. Somit kann die Außenanregung von wenigstens Drosselorgan und Verdichterelement sicher gestellt werden. Selbstverständlich ist die nicht begrenzend zu verstehen, so dass es auch denkbar ist, dass der externe Aktor um das Gehäuse herum verfahrbar ausgebildet ist. Hierdurch kann lediglich ein Aktor sämtlich von außen anzuregende Bauteile bedienen. Dies ist besonders kostensparend.

Bei einer weiteren vorteilhaften Ausführungsform sind der wenigstens eine Aktor und das wenigstens eine Verdichterelement und/oder das wenigstens eine Drosselorgan kabellos miteinander gekoppelt, beispielsweise über magnetische Wechselwirkungen.

Bei einer weiteren vorteilhaften Ausführungsform ist das das System umschließende Gehäuse als hermetisch dichte Kapsel ausgebildet. Dies ist von Vorteil, da hierdurch ein Stoffaustausch zwischen dem Kapselinneren und der Umgebung ausgeschlossen werden kann.

In einer weiteren vorteilhaften Ausführungsform ist die Kapsel mittels generativem Schichtaufbau hergestellt. Dies hat sich als besonders vorteilhaft erwiesen, da es mit einem derartigen Schichtaufbauverfahren erstmals möglich ist, alle Zu- und Ableitungen in die Kapsel hinein bzw. aus der Kapsel heraus direkt bei der Kapselherstellung mit vorzusehen und entsprechend zu integrieren. So kann sichergestellt werden, dass keine unerwünschten Leitungsabbrüche oder Risse, wie bei nachträglich eingebrachten Leitungsdurchführungen, bei der hermetisch dichten Kapsel auftreten können.

Bei einer weiteren vorteilhaften Ausführungsform ist die Kapsel als lasergesinterte Kapsel und/oder als dreidimensional gedruckte Kapsel ausgebildet. Besonders vorteilhaft ist die Kapsel aus Metall und/oder aus metallischen Verbindungen ausgebildet. Dies stellt vorteilhaft sicher, dass die Außenanregung, beispielsweise über Magnetismus, verlässlich und dauerhaft funktioniert.

Selbstverständlich sind die hier beschriebenen Ausführungsformen nicht begrenzend zu verstehen, sodass es auch denkbar ist, dass die einzelnen Einheiten wie Verdichtereinheit, Drosselorgan und/oder Wärmetauscher separat für sich in einer hermetisch dichten Kapsel angeordnet sind. Auch dann kann für jede hermetisch dichte Kapsel und dem darin angeordneten Bauteil ein außenliegender, also externer, Aktor vorgesehen sein. Auch ist denkbar, dass für alle gekapselten Bauteile lediglich ein einziger Aktor vorgesehen ist, welche über eine smarte Steuerung die entsprechende Änderung der einzelnen Betriebszustände kontrolliert und sicherstellen kann.

So betrifft die Erfindung auch eine Verdichtereinheit zum Verdichten wenigstens eines gasförmigen und/oder flüssigen Fluidmittels, wobei die Verdichtereinheit wenigstens ein Verdichterelement zur Ausbildung eines Vortriebs des wenigstens einen gasförmigen und/oder flüssigen Fluidmittels aufweist, und die Verdichtereinheit weiterhin ein Gehäuse aufweist, welches die wenigstens eine Verdichtereinheit hermetisch dicht umschließt, wobei das wenigstens eine Verdichterelement in einer aktiven Betriebsposition von außen her angeregt ist. Ergänzend oder alternativ kann auch ein Drosselorgan zum Expandieren wenigstens eines gasförmigen und/oder flüssigen Fluidmittels vorgesehen sein, wobei das Drossselorgan weiterhin ein Gehäuse aufweist, welches das wenigstens eine Drosselorgan hermetisch dicht umschließt, wobei das Drosselorgan in einer aktiven Betriebsposition von außen her angeregt ist. Derart ausgebildete Drosselorgane und/oder Verdichtereinheiten stellen die kleinstmöglichen Einheiten dar, welche hermetisch abgeschlossen sein können und über eine Außenanregung gesteuert und aktiviert werden können. Auch hier ist sichergestellt, dass durch die Außenanregung besonders leichte und kostengünstige Wartungen und Reparaturen der Aktoren sichergestellt werden können.

Weiterhin betrifft die vorliegende Erfindung die Verwendung des Systems und/oder der Verdichtereinheit und/oder des Drosselorgans in einer hermetisch dichten Kapsel mit Außenanregung in einem Kühlkreislauf, in einem Kältekreislauf, in einem Heizkreislauf, zu Reinigungszwecken, in Automobilen und/oder als Ersatz von Druckluftgeräten.

Weitere vorteilhafte, Merkmale und Ausgestaltungsmöglichkeiten ergeben sich aus der nachfolgenden Figurenbeschreibung von nicht einschränkend zu verstehenden Ausführungsbeispielen.

### Kurzbeschreibung der Zeichnungen

In den Zeichnungen zeigen:
- Figur 1: eine schematische Ansicht einer gekapselten Verdichtereinheit; und
- Figur 2: eine schematische Ansicht eines gekapselten Systems.

In den Zeichnungen mit gleichen Bezugszeichen versehene Elemente entsprechen im Wesentlichen einander, sofern nichts anderes angegeben ist darüber hinaus wird darauf verzichtet, Bestandteile zu zeigen und zu beschreiben, welche nicht wesentlich zum Verständnis der hierin offenbarten technischen Lehre sind. Im Weiteren werden nicht für alle bereits eingeführten und dargestellten Elemente die Bezugszeichen wiederholt, sofern die Elemente selbst und deren Funktion bereits beschrieben wurden oder für einen Fachmann bekannt sind.

### Ausführliche Beschreibung von Ausführungsbeispielen

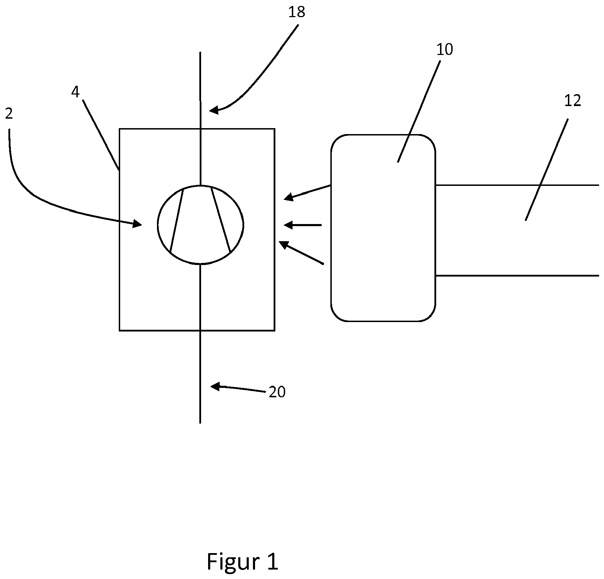

In Figur 1 ist beispielhaft eine schematische Ansicht einer Verdichtereinheit 2 gezeigt. Zu der Verdichtereinheit 2 hin ist wenigstens eine Zuführungsleitung 6 vorgesehen, welche das gasförmige und/oder flüssige Fluidmittel transportiert. In diesem ersten Ausführungsbeispiel ist die Verdichtereinheit 2 selbst gekapselt ausgebildet und weist ein hermetisch dichtes Gehäuse 4 in Form einer Kapsel auf. Um nun den aktiven Betriebszustand der Verdichtereinheit 2 herzustellen, diese also einzuschalten, ist weiterhin eine Außenanregung 8 vorgesehen. Diese Außenanregung 8 kann exemplarisch zweiteilig ausgebildet sein, beispielsweise mit einem Funktionskopf 10 und dessen Träger 12. Der Träger 12 dient dazu, die Position des Funktionskopfes 10 bestmöglich gegenüber der Verdichtereinheit 2 auszurichten. Mit dem Träger 12 kann beispielsweise auch der Abstand und/oder die Drehung des Funktionskopfes 10 zwischen dem hermetisch dichten Gehäuse 4 und dem Funktionskopf 10 justiert und eingestellt werden.

Der Funktionskopf 10 kann in Pfeilrichtung wenigstens gerichtete Signale abgeben, welche durch das hermetisch dichte Gehäuse 4, vorteilhaft im Wesentlichen verlustfrei, hindurch treten und mit der Verdichtereinheit 2, vorteilhafter mit deren Schnittstelle, in Wechselwirkung treten. Vorteilhaft ist unter dem Begriff Signal auch ein Strahlungsfluss zu verstehen.

Im einfachsten Fall bedeutet dies mit Signalfluss, beispielsweise magnetisch, WLAN, Funk, NFC oder Bluetooth®, wird die Verdichtereinheit 2 vom inaktiven Betriebszustand in den aktiven Betriebszustand angeregt. Im aktiven Betriebszustand läuft die Verdichtereinheit gemäß ihrer Bestimmung und verdichtet das zufließende gasförmige und/oder flüssige Fluidmittel.

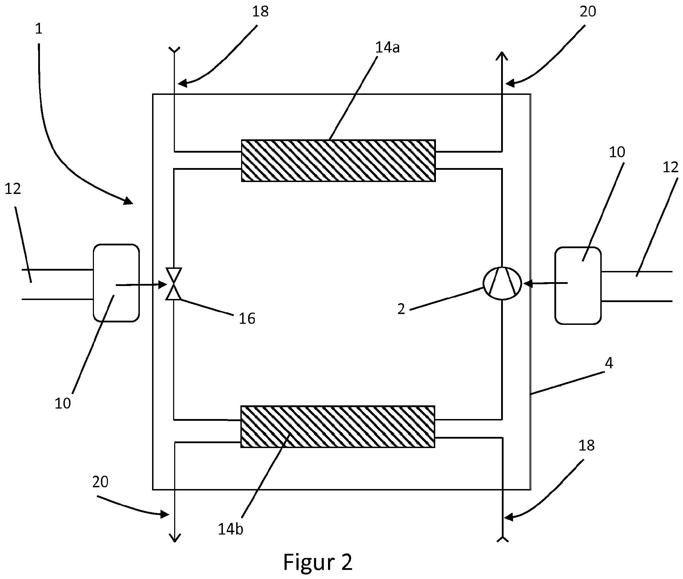

In Figur 2 ist ein System 1 ein gezeigt, welches exemplarisch 2 Wärmetauscher 14a, 14b aufweist. Neben den Wärmetauschern 14a, 14b ist weiterhin eine Verdichtereinheit 2 sowie ein Drosselorgan 16 vorgesehen. Drosselorgan 16, Wärmetauscher 14a, 14b sowie Verdichtereinheit 2 sind über einen Kreislauf miteinander verbunden. Die beiden Wärmetauscher 14a, 14b sind zusätzlich noch mit Zuführungsleitungen 18 bzw. Abführungsleitungen 20 ausgestattet. Die Zuführungsleitungen 18 und Abführungsleitungen 20 dienen dem Transport des gekühlten und/oder aufgewärmten gasförmigen und/oder flüssigen Fluidmittels zu möglichen Verbrauchern.

In der in Fig. 2 dargestellten Ausführungsform des Systems 1 ist weiterhin ersichtlich, dass die beiden Wärmetauscher 14a, 14b, das Drosselorgan 16 sowie die Verdichtereinheit 2 nebst den dazugehörigen Leitungssystem innerhalb eines hermetisch dichten Gehäuses 4 angeordnet sind. Dieses hermetisch dichte Gehäuse 4 ist als Kapsel ausgebildet, vorteilhaft mittels generativem Schichtaufbauverfahren hergestellt. Dies kann beispielsweise durch Lasersintern und/oder durch 3-D-Druck ausgebildet werden.

Das hermetisch dichte Gehäuse 4 weist lediglich bei den Zuführungsleitungen 18 und Abführungsleitungen 20 Unterbrechungen auf. Diese Leitungsdurchtritte werden aber bereits im Herstellungsverfahren des hermetisch dichten Gehäuses 4 berücksichtigt, sodass keine nachträgliche Bearbeitung des Gehäuses 4 stattfinden muss. Das hermetisch dichte Gehäuse 4 kann somit einteilig und besonders kompakt hergestellt werden.

Auch die darin angeordneten Bauteile, Verdichtereinheit 2, Wärmetauscher 14a,14b sowie Drosselorgan 16 können in Abhängigkeit der gewünschten Funktion entsprechend kompakt angeordnet werden.

Weiterhin zeigt diese besondere Ausführungsform die Außenanregungen 8, wobei hier exemplarisch jeweils zwei unterschiedliche Aktoren 8 jeweils für die Verdichtereinheit 2 und für das Drosselorgan 16 vorgesehen sind. Auch hier weisen die Aktoren 8 jeweils einen Träger 12 zur Positionseinstellung des Aktors 8 auf. Die eigentliche Steuerung der Betriebsfunktion von Drosselorgan 16 und Verdichtereinheit 2 wird über den Funktionskopf 10 gesteuert. Selbstverständlich ist auch denkbar, dass beide Funktionsköpfe 10 über eine zentrale Steuereinheit kontrolliert werden, sodass die von den Funktionsköpfen 10 ausgehenden Signale kontrolliert eingestellt werden können. Unter kontrolliert eingestellt kann beispielsweise verstanden werden, dass die Intensität oder die Frequenz der Signale variabel einstellbar ist.

Darüber hinaus ist auch denkbar, dass es zusätzlich an dem Funktionskopf 10 Elemente gibt, welche die Signale gezielt gegen das Verdichterelement und/oder das Drosselorgan 16 lenken, sodass eine besonders effektive Steuerung derselben möglich ist.

Weiterhin hat es sich als vorteilhaft erwiesen, zwischen Verdichtereinheit 2 und Drosselorgan 16 wenigstens ein Isolierelement vorzusehen (nicht gezeigt), welches im einfachsten Fall plattenförmig ausgebildet ist. Dieses Isolierelement stellt sicher, dass die durch den Funktionskopf 10 ausgesandten Signale, welche zur Außenanregung der Verdichtereinheit 2, vorteilhafter dem Verdichterelement, ausgebildet sind, abgefangen werden. Somit ist es möglich, dass eine definierte Außenanregung über den Aktor 8 stets für das gewünschte Bauteil, nämlich für die Verdichtereinheit 2 oder für das Drosselorgan 16 sichergestellt wird. Das Isolierelement verhindert eine unerwünschte Signalweiterleitung und verhindert Wechselwirkungen der Signale untereinander, wenn wie in Figur 2 gezeigt, die beiden Aktoren 8 einander gegenüberliegend angeordnet sind. Das Isolierelement kann daher auch als Strahlungsfänger bezeichnet werden.

Obwohl die Erfindung im Detail durch die vorteilhaften Ausführungsbeispiele näher illustriert und beschrieben wurde, so ist die Erfindung nicht durch die offenbarten Beispiele eingeschränkt. Andere Variationen können vom Fachmann hieraus abgeleitet werden, ohne den Schutzumfang der Erfindung zu verlassen. Insbesondere beschränkt sich die Erfindung nicht auf die nachfolgend angegebenen Merkmalskombinationen, sondern es können auch für den Fachmann offensichtlich ausführbare andere Kombinationen und Teilkombinationen aus den offenbarten Merkmalen gebildet werden

### Bezugszeichenliste

- 1: System
- 2: Verdichtereinheit
- 4: hermetisch dichtes Gehäuse
- 6: Zuführungsleitung
- 8: Außenanregung/Aktor
- 10: Funktionskopf
- 12: Träger
- 14a, 14b: die Wärmetauscher
- 16: Drosselorgan
- 18: Zuführungsleitung
- 20: Abführungsleitung

## Patentansprüche

1. System (1) mit wenigstens einer Verdichtereinheit (2) zum Verdichten wenigstens eines gasförmigen und/oder flüssigen Fluidmittels, wobei die Verdichtereinheit (2) wenigstens ein Verdichterelement zur Ausbildung eines Vortriebs des wenigstens einen gasförmigen und/oder flüssigen Fluidmittels aufweist, und das System (1) weiterhin wenigstens ein Drosselorgan (16) und wenigstens einen Wärmetauscher (14a/14b) aufweist, wobei wenigstens Verdichtereinheit (2) und/oder Drosselorgan (16) und/oder Wärmetauscher (14a/14b) von einem hermetisch dichten Gehäuse (4) umschlossen sind und das wenigstens eine Verdichterelement und/oder das wenigstens eine Drosselorgan (16) in einer aktiven Betriebsfunktion von außerhalb des Gehäuses (4) her angeregt sind.

2. System nach Anspruch 1,
**dadurch gekennzeichnet, dass**
das wenigstens eine Verdichterelement und/oder wenigstens eine Drosselorgan (16) in der aktiven Betriebsfunktion direkt und/oder indirekt von außen her über wenigstens einen Aktor (8) angeregt ist.

3. System nach Anspruch 1,
**dadurch gekennzeichnet, dass**
das wenigstens eine Verdichterelement magnetisch ausgebildet ist und/oder dass das wenigstens eine Drosselorgan (16) magnetisch betätigbar ausgebildet ist.

4. System nach wenigstens einem der vorangegangenen Ansprüche,
**dadurch gekennzeichnet, dass**
die wenigstens eine Verdichtereinheit (2) und/oder das wenigstens eine Drosselorgan (16) jeweils wenigstens eine Schnittstelle aufweist, welche zur Steuerung der aktiven Betriebsfunktion vorgesehen ist, wobei außerhalb des hermetisch dichten Gehäuses (4) der wenigstens eine Aktor (8) angeordnet ist, welcher jeweils mit der wenigstens einen Schnittstelle zur Steuerung der Betriebsfunktion gekoppelt ist.

5. System nach Anspruch 4,
**dadurch gekennzeichnet, dass**
der wenigstens eine Aktor (8) als eine außerhalb des Gehäuses (4) angeordnet Antriebseinheit des wenigstens einen Verdichterelements ausgebildet ist und/oder dass ein weiterer Aktor (8) als eine außerhalb des Gehäuses (4) angeordnet Betätigungseinheit des wenigstens einen Drosselorgans (16) ausgebildet ist.

6. System nach Anspruch 4 oder 5,
**dadurch gekennzeichnet, dass**
der wenigstens Aktor (8) und das wenigstens eine Verdichterelement kabellos miteinander gekoppelt ausgebildet sind.

7. System nach Anspruch 1,
**dadurch gekennzeichnet, dass**
das Gehäuse (4) als hermetisch dichte Kapsel ausgebildet ist.

8. System nach Anspruch 7,
**dadurch gekennzeichnet, dass**
die Kapsel mittels generativem Schichtaufbau hergestellt ist.

9. System nach Anspruch 7 oder 8,
**dadurch gekennzeichnet, dass**
die Kapsel als lasergesinterte Kapsel und/oder als dreidimensional gedruckte Kapsel ausgebildet ist.

10. Verdichtereinheit (2) zum Verdichten wenigstens eines gasförmigen und/oder flüssigen Fluidmittels, wobei die Verdichtereinheit (2) wenigstens ein Verdichterelement zur Ausbildung eines Vortriebs des wenigstens einen gasförmigen und/oder flüssigen Fluidmittels aufweist, und die Verdichtereinheit (2) weiterhin ein Gehäuse (4) aufweist, welches die wenigstens eine Verdichtereinheit (2) hermetisch dicht umschließt, wobei das wenigstens eine Verdichterelement in einer aktiven Betriebsposition von außen her angeregt ist.

11. Drosselorgan (16) zum Expandieren wenigstens eines gasförmigen und/oder flüssigen Fluidmittels, wobei das Drossselorgan (16) weiterhin ein Gehäuse (4) aufweist, welches das wenigstens eine Drosselorgan (16) hermetisch dicht umschließt, wobei das Drosselorgan (16) in einer aktiven Betriebsposition von außen her angeregt ist.

12. Verwendung des Systems (1) und/oder der Verdichtereinheit (2) und/oder des Drosselorgans (16) nach einem der vorgenannten Ansprüche in einem Kühlkreislauf, Kältekreislauf, Heizkreislauf, zu Reinigungszwecken, in Automobilen, als Ersatz von Druckluftgeräten.
